(19)

**Europäisches Patentamt**
**European Patent Office**
**Office européen des brevets**

(11) **EP 3 191 263 B1**

(12) **EUROPEAN PATENT SPECIFICATION**

(45) Date of publication and mention
of the grant of the patent:
**27.10.2021 Bulletin 2021/43**

(51) Int Cl.:
***B25J 9/16*** *(2006.01)*

(21) Application number: **15707663.9**

(22) Date of filing: **04.03.2015**

(86) International application number:
**PCT/EP2015/054538**

(87) International publication number:
**WO 2016/037710 (17.03.2016 Gazette 2016/11)**

(54) **A ROBOT CONTROLLER, A ROBOT UNIT AND A METHOD FOR CONTROLLING THE OPERATION OF A ROBOT UNIT**

ROBOTERSTEUERGERÄT, ROBOTEREINHEIT UND VERFAHREN ZUR STEUERUNG DES BETRIEBS EINER ROBOTEREINHEIT

DISPOSITIF DE COMMANDE DE ROBOT, UNITÉ DE ROBOT ET PROCÉDÉ POUR COMMANDER LE FONCTIONNEMENT D'UNE UNITÉ DE ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2014 PCT/EP2014/069483**

(43) Date of publication of application:
**19.07.2017 Bulletin 2017/29**

(73) Proprietor: **ABB Schweiz AG**
**5400 Baden (CH)**

(72) Inventors:
• **LUNDBÄCK, Daniel**
**S-723 55 Västerås (SE)**
• **ANDERSSON, Hans**
**S-725 91 Västerås (SE)**
• **WESTRÖM, Jakob**
**S-724 60 Västerås (SE)**
• **TALLBERG, Mattias**
**S-722 31 Västerås (SE)**
• **NORRLÖF, Mikael**
**S-602 12 Norrköping (SE)**

(74) Representative: **Kransell & Wennborg KB**
**P.O. Box 27834**
**115 93 Stockholm (SE)**

(56) References cited:
**US-B2- 6 791 292**

• STOY K ET AL: "A simple approach to the control of locomotion in self-reconfigurable robots", ROBOTICS AND AUTONOMOUS SYSTEMS, ELSEVIER SCIENCE PUBLISHERS, AMSTERDAM, NL, vol. 44, no. 3-4, 30 September 2003 (2003-09-30), pages 191-199, XP004452886, ISSN: 0921-8890, DOI: 10.1016/S0921-8890(03)00069-1
• DAQING WANG ET AL: "Development of Control System Architecture for Modular and Re-configurable Robot Manipulators", MECHATRONICS AND AUTOMATION, 2007. ICMA 2007. INTERNATIONAL CONFERENCE ON, IEEE, PI, 1 August 2007 (2007-08-01), pages 20-25, XP031134706, ISBN: 978-1-4244-0827-6
• KARLEN J P ET AL: "A DUAL-ARM DEXTEROUS MANIPULATOR SYSTEM WITH ANTHROPOMORPHIC KINEMATICS", PROCEEDINGS OF THE INTERNATIONAL CONFERENCE ON ROBOTICS AND AUTOMATION. CINCINNATI, MAY 13 - 18, 1990; [PROCEEDINGS OF THE INTERNATIONAL CONFERENCE ON ROBOTICS AND AUTOMATION], LOS ALAMITOS, IEEE COMP. SOC. PRESS, US, vol. -, 13 May 1990 (1990-05-13), pages 368-373, XP000139936, DOI: 10.1109/ROBOT.1990.126003 ISBN: 978-0-8186-9061-7

**(Cont. next page)**

- JING YUAN ET AL: "Power Efficiency Estimation-Based Health Monitoring and Fault Detection of Modular and Reconfigurable Robot", IEEE TRANSACTIONS ON INDUSTRIAL ELECTRONICS, IEEE SERVICE CENTER, PISCATAWAY, NJ, USA, vol. 58, no. 10, 1 October 2011 (2011-10-01), pages 4880-4887, XP011382447, ISSN: 0278-0046, DOI: 10.1109/TIE.2011.2116753

**Description**

FIELD OF THE INVENTION

The present invention relates to a robot controller for controlling the operation of a robot unit. The robot unit comprises a plurality of robot arms that each comprises at least one motion mechanism adapted to set the robot arm in motion, wherein a tool of the robot unit is adapted to be moved along an operational path. The robot controller is adapted to determine the kinetic energy subjected to each motion mechanism of the robot arms, and, on basis of the determined kinetic energies, control the speed of each motion mechanism, while maintaining a movement of the tool along the operational path, so that said kinetic energy subjected to each motion mechanism does not exceed a certain level.

The present invention also relates to a robot unit and a method for controlling the operation of a robot unit.

PRIOR ART

Robot units are used in many different industrial applications, such as for assembling, painting, welding, etcetera. Robot units are available in many different configurations dependent on their intended application.

Robot units are arranged with a plurality of robot arms that comprise one or more motion mechanisms. Each motion mechanism comprises one of a rotational axis and translation mechanism. The rotational axis is adapted to generate a rotational motion of the robot arm around the rotational axis. The translation mechanism is adapted to generate a displacement motion of the robot arm.

Each motion mechanism comprises a motor unit for setting the motion mechanism in motion and a brake unit for bringing the motion mechanism to a standstill position. The motor unit is for example an electric motor. The brake unit is for example a mechanical brake.

A problem with prior art robot units is that the different motion mechanisms require braking units with different braking capacities in order to enable the robot unit to brought to a standstill position within certain specified criteria, such as time, distance, rotation angle, etcetera. Accordingly, a problem with prior art robot units is that the robot units include a plurality of different types of brake units, which results in undesirable cost and complexity when manufacturing and repairing the robot unit. US2003233171 discloses a method for limitation of the force action of a robot unit. The method comprises calculating the total kinetic energy of the robot unit and determining if the energy exceeds a certain level. If the total kinetic energy exceeds the certain level, the operating speed of the robot unit is reduced. US7852030 discloses a controller for controlling a robot unit with a power off brake. The controller comprises means for calculating the speeds of the joints of the robot unit, determining if the speeds of the joints exceed a threshold speed, and if the speeds exceeds the threshold speed, initiating the power off brake.

US6791292 B2 discloses a method for controlling the movement of a robot. Accompanied by the optimization of the possibilities of use of a robot, particularly with regards to low cycle times and high loads, damage to the robot through exceeding the energy absorbable by the structure is still prevented when robot parts strike against the mechanical structure as a result of faults or errors, according to the invention in a method for controlling the movement of a robot, the kinetic energy of moving robot members about an axis is limited to the energy absorbable in damage-free manner by a mechanical buffer associated with the corresponding axis.

OBJECTS AND SUMMARY OF THE INVENTION

An object of the present invention is to provide an improved robot unit and a robot controller. Specifically, the object of the present invention is to provide a robot controller that enables the robot unit it controls to have a simplified design and a reduced number of different parts.

This object is obtained by a robot controller according to claim 1. The robot controller is characterized in that the certain level of said kinetic energy is the same for at least two motion mechanisms.

The robot controller determines the kinetic energy subjected to each motion mechanism of the robot arms. The kinetic energy subjected to each motion mechanism is restricted to a certain level by controlling the speeds of the respective motion mechanisms. In order to maintain the movement of the tool along the operational path, the speeds of other motion mechanisms of the robot unit may be reduced even though the kinetic energy subjected to each motion mechanism of the robot arms does not exceed the certain level. If the speeds of the other motion mechanisms would not be reduced, the robot unit would move the robot tool along a different operational path than what was intended.

The motion mechanism comprises rotational axes and translation mechanisms. The rotational axes provide a rotational movement of the robot arm. The translation mechanisms provide a displacement of the robot arm or a part of the robot arm. The translation mechanism is for example a screw axis, a guide rail, and etcetera, that provides the displacement of the robot arm.

By means of determining and controlling the speeds of the motion mechanisms so that the kinetic energy subjected to each of the at least two motion mechanisms does not exceed the same certain level, the same type of braking brake units can be used in the at least two motion mechanisms for breaking the motion mechanisms of the robot unit.

Accordingly, the robot unit can be constructed in a simpler manner compared to prior art robot units. The robot unit can be manufactured using fewer different components, which reduces the cost of manufacturing and maintaining the robot unit. In particular, the robot unit can be manufactured with reduced number of different types of brake units compared with prior art robot units.

According to an embodiment of the invention, the robot controller is adapted to determine said kinetic energy on basis of the speed of one or more of the robot arms and the tool, and the mass of the one or more robot arms and the tool.

For an inner robot arm that provides a connection to one or more outer robot arms, the speed and mass of these outer robot arms needs to be taken into account when determining the kinetic energy subjected to a motion mechanism of an inner robot arm.

In regards to a rotational motion, the robot controller is adapted to determine the kinetic energy subjected to each motion mechanism of the robot arms on basis of the operation of the robot unit and the configuration of the robot arms and the tool.

In particular, the kinetic energy $E_r$ of the rotational axis is generally determined based on the expression:

$$E_r = \frac{I\omega^2}{2}$$

where I is the moment of inertia around the rotational axis of the one or more of the robot arms and the tool that are in motion in respect to the rotational axis, and $\omega$ is the angular velocity.

In regards to a translation motion, the kinetic energy of the translation mechanism $E_k$ is generally determined based on the expression:

$$E_k = \frac{1}{2}mv^2$$

where m is the mass of the one or more of the robot arms and the tool that are in motion in respect to the translation mechanism, and v is speed of displacement of the one or more of the robot arms and the tool.

According to an embodiment of the invention, each motion mechanism comprises a motor unit, and wherein the robot controller is adapted to control the speed of each motion mechanism so that said kinetic energy does not exceed the certain level by regulating the speed of each motion mechanism using the respective motor unit.

According to an embodiment of the invention, each motor unit is adapted to regulate the speed of the respective motion mechanism by means of reducing the induced power from the motor unit. By reducing the speeds of the motion mechanisms by means of reducing the induced power from the motor unit, no energy is lost during the control kinetic energy.

According to an embodiment of the invention, each motor unit is adapted to regulate the speed of the respective mechanism by means of motor braking with the motor unit. By reducing the speeds of the motion mechanisms by means of motor braking, a faster control of the kinetic energy is obtained compared to reducing the speeds by reducing the induced power from the motor unit.

According to an embodiment of the invention, each motion mechanism comprises a brake unit, and wherein the robot controller is adapted to control the speed of each motion mechanism so that said kinetic energy does not exceed the certain level by applying the respective brake unit. By reducing the speeds of the motion mechanisms by means of the brake unit, an almost immediate control of the kinetic energy is obtained. The above object is also obtain by a robot unit according to claim 7.

According to an embodiment of the invention, wherein the motion mechanism comprises at least one of a rotational axis and a translation mechanism.

According to an embodiment of the invention, a majority of the brake units of the motion mechanisms are of the same type. Accordingly, the motion mechanisms comprise reduced number of different types of brake units compared to prior art robot units. By means reducing the number of different types of brake units, the robot unit can be constructed in a simpler manner compared to prior art robot units. Furthermore, the cost of manufacturing and maintaining the robot unit is reduced.

The above object is also obtain by a method according to claim 10. The method comprises the step of

- receiving information relating to the operation of the robot unit,
- determining the kinetic energy subjected to each motion mechanism of the robot arms on basis of said information, and
- controlling the speed of each motion mechanism, while maintaining a movement of the tool along the operational path, so that said kinetic energy subjected to each motion mechanism does not exceed a certain level, wherein said certain level of said kinetic energy is the same for at least two motion mechanisms.

According to an embodiment of the invention, the method comprises:

- receiving information on the speed of the at least one motion mechanism, and
- determining said kinetic energy on basis of the speed of one or more of the robot arms and the tool, and the mass of the one or more robot arms and the tool.

According to an embodiment of the invention, the method comprises:

- controlling the speed of each motion mechanism so that said kinetic energy does not exceed the certain level by regulating the speed of the motion mechanism using the motor unit of the respective at least one motion mechanisms.

According to an embodiment of the invention, the method comprises:

- regulating the speed of each motion mechanism by means of reducing the induced power from the motor unit.

According to an embodiment of the invention, the method comprises:

- regulating the speed of each motion mechanisms by means of motor braking with the motor unit.

According to an embodiment of the invention, the method comprises:

- controlling the speeds of each motion mechanisms so that said kinetic energy does not exceed the certain level by applying the brake unit of the respective at least one motion mechanisms.

BRIEF DESCRIPTION OF THE DRAWINGS

The invention will now be explained more closely by the description of different embodiments of the invention and with reference to the appended figures.

Fig. 1a    shows a robot unit controlled by a robot controller according to an embodiment of the invention.

Fig. 1b    shows motion mechanisms of the robot unit in fig. 1.

Fig. 2    shows a flow chart of a method for controlling a robot unit according to an embodiment of the invention.

DETAILED DESCRIPTION OF PREFERRED EMBODIMENTS OF THE INVENTION

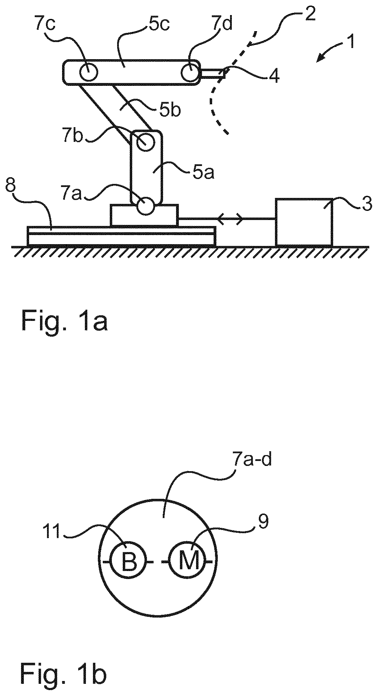

Fig. 1a shows a robot unit 1 controlled by a robot controller 3 according to an embodiment of the invention.
The robot unit 1 comprises a plurality of robot arms 5a-c. In the disclosed embodiment in fig. 1, the robot unit 1 comprises three robot arms 5a-c and a tool 4 attached to the outer of the robot arms 5c. The robot arms 5a-c comprise one or more motion mechanisms 7a-d, 8 adapted to set the robot arms 5a-c in motion. The motion mechanisms 7a-d, 8 comprise rotational axes 7a-d and translation mechanisms 8.
The rotational axes 7a-d provide rotational movements of the robot arms 5a-c. The translation mechanism 8 provides a displacement of the robot arms 5a-c. In the disclosed embodiment in fig. 1, the robot unit 1 comprises in total four rotational axes 7a-d and one translation mechanism 8 in the form of a guide rail used for displacing the robot arms 5a-c.
Fig. 1b shows one of the rotational axes 7a-d of the robot unit 1 in fig. 1. Each motion mechanism 7a-d, 8 comprises a motor unit 9 and a brake unit 11. The motor unit 9 is for example an electric motor. The brake unit 11 is for example a mechanical brake.
The robot controller 3 controls the operation of the robot unit 1 by means of controlling the speeds of the motion mechanisms 7a-d, 8. In particular, the robot controller 3 enables the robot tool 4 to be moved along an operational path 2 by means of that the robot controller 3 regulates the speeds of the motion mechanisms 7a-d, 8 of the robot arms 5a-c, that is the rotational speeds of the rotational axes 7a-d and the displacement speed of the translation mechanism 8.
The robot controller 3 is adapted to determine the kinetic energy subjected to each motion mechanism 7a-d, 8 of the robot arms 5a-c on basis of the operation of the robot unit and the configuration of the robot arms and the tool.
For an inner robot arm 5a-b that connects one or more outer robot arms 5b-c, also mass and speed of theses outer robot arms and the tool 4 need to be taken into account when determining the kinetic energy subject to the motion mechanism 7a-d, 8 of the inner robot arm 5a-b.
The kinetic energies $E_r$ in respect to the rotational axes 7a-d are determined generally based on the expression:

$$E_r = \frac{I\omega^2}{2}$$

where I is the moment of inertia around the rotational axis 7a-d of the one or more of the robot arms 5a-c and the tool 4 that are in motion in respect to the rotational axis, and $\omega$ is the is the angular velocity.
The kinetic energy $E_k$ in respect to the translation mechanism 8 is determined generally based on the expression:

$$E_k = \tfrac{1}{2}mv^2$$

where m is the mass of the one or more of the robot arms 5a-c and the tool 4 that are in motion in respect to the translation mechanism, and v is speed of displacement of the one or more of the robot arms 5a-c and the tool 4.
After that the kinetic energy subjected to each motion mechanism 7a-d, 8 of the robot arms 5a-c has been determined, the robot controller 3 controls the speeds of the motion mechanisms 7a-d, 8 so that the kinetic energy subjected to each motion mechanism 7a-d, 8 of the robot arms 5a-c does not exceed a certain level. The speeds are controlled so that the kinetic energy subjected to each of at least two motion mechanisms is limited to the same level. The control of the kinetic energies is done while maintaining the operational path 2 of the tool 4. This is done by controlling the speeds of the other motion mechanisms 7a-d, 8 of the robot arms 5a-c that are involved in movements of the robot arms 5a-c. Accordingly, if the kinetic energy subjected to any motion mechanism 7a-d, 8 is about to exceed the respective certain limit, the speed of the respective motion mechanism 7a-d, 8 is controlled so that the limit is not exceeded. The speeds of further motion mechanisms 7a-d, 8 that are involved in movements of the robot arms 5a-c must also be limited in order to maintain the movement of the tool 4 along the operational path 2.

The speeds of the one or more motion mechanisms 7a-d, 8 are limited by either regulating the speeds of the motion mechanisms 7a-d, 8 by means of the motor units 9 or by applying the brake units 11 of the respective motion mechanisms 7a-d, 8. The speeds of the motion mechanisms 7a-d, 8 are regulated by means of the motor units 9 by either reducing the induced power from the motor unit 9 or by motor braking with the motor unit 9.

By limiting the kinetic energy below the certain level, it is assured that the robot unit 1 can be emergency braked to a standstill position sufficiently quickly. Thereby, it is possible to manufacture the robot unit 1 using the same type of brake unit 11 or using reduced number of different brake units 11 in the motion mechanisms 7a-d, 8. Thereby, the cost of manufacturing and maintaining the robot unit 1 is reduced compared to prior art robot units 1.

According to an embodiment of the invention, the robot controller 3 is adapted to continuously determine and control the kinetic energies in respect to the motion mechanisms 7a-d, 8 of the robot unit 1.

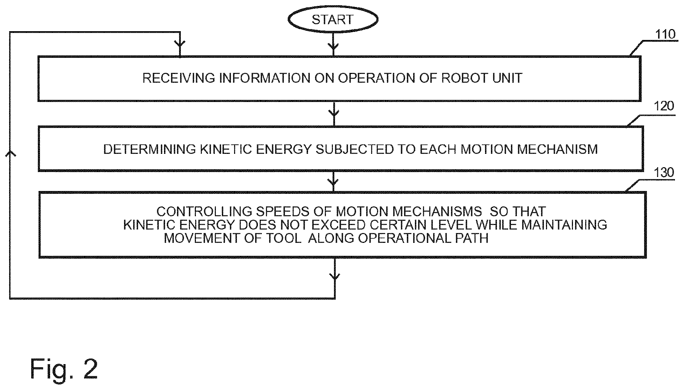

Fig. 2 shows a flow chart of a method for controlling a robot unit 1 according to an embodiment of the invention.

In a step 110, the method is initiated by receiving information on the operation of the robot unit 1. In particular, information on the speeds of the motion mechanisms 7a-d, 8 of the robot unit 1 is received.

In a step 120, the method comprises determining the kinetic energy subjected to each motion mechanism 7a-d, 8 of the robot arms 5a-c. The kinetic energy is determined on basis of the speed of rotation for the rotational axes 7a-c and speed of displacement for the translation mechanisms 8, together with mass and the configuration of the robot arms 5a-c and the tool 4.

In a step 130, the method comprises controlling the speeds of the motion mechanisms 7a-d, 8 so that the kinetic energy that is subjected to each motion mechanism 7a-d, 8 of the robot arms 5a-c does not exceed a certain level while maintaining the movement of the tool 4 along the operational path 2. The kinetic energy subjected to each of at least two of the motion mechanisms 7a-d, 8 is controlled so that it does not exceed the same certain level. The speeds are controlled by reducing the induced power from the motor unit 9, motor braking with the motor unit or by applying the brake unit 11 of the one or more of the motion mechanisms 7a-d, 8.

The present invention is not limited to the disclosed embodiments but may be modified within the framework of the claims.

## Claims

1. A robot controller (3) for controlling the operation of a robot unit (1), which robot unit (1) comprises a plurality of robot arms (5a-c) that each comprises at least one motion mechanism (7a-d, 8) adapted to set the robot arm (5a-c) in motion, wherein a tool (4) of the robot unit (1) is adapted to be moved along an operational path (2), the robot controller (3) being adapted to determine the kinetic energy subjected to each motion mechanism (7a-d, 8) of the robot arms (5a-c), and, on basis of the determined kinetic energies, control the speed of each motion mechanism (7a-d, 8), while maintaining a movement of the tool (4) along the operational path (2), so that said kinetic energy subjected to each motion mechanism does not exceed a certain level,
**characterized in that**
said certain level of said kinetic energy is the same for at least two motion mechanisms.

2. The robot controller (3) according to claim 1, wherein the robot controller (3) is adapted to determine said kinetic energy on basis of the speed of one or more of the robot arms (5a-c) and the tool (4), and the mass of the one or more robot arms (5a-c) and the tool (4).

3. The robot controller (3) according to any of claims 1 and 2, wherein each motion mechanism (7a-d, 8) comprises a motor unit (9), and wherein the robot controller (3) is adapted to control the speed of each motion mechanism (7a-d, 8) so that said kinetic energy does not exceed the certain level by regulating the speed of each motion mechanism (7a-d, 8) using the respective motor unit (9).

4. The robot controller (3) according to claim 3, wherein each motor unit (9) is adapted to regulate the speed of the respective motion mechanism (7a-d, 8) by means of reducing the induced power from the motor unit (9).

5. The robot controller (3) according to claim 3, wherein each motor unit (9) is adapted to regulate the speed of the respective mechanism (7a-d, 8) by means of motor braking with the motor unit (9).

6. The robot controller (3) according to any of the previous claims, wherein each motion mechanism (7a-d, 8) comprises a brake unit (11), and wherein the robot controller (3) is adapted to control the speed of each motion mechanism (7a-d, 8) so that said kinetic energy does not exceed the certain level by applying the respective brake unit (11).

7. A robot unit (1) comprising a robot controller (3) according to any of claims 1-6.

8. The robot unit (1) according to claim 7, wherein the motion mechanism (7a-d, 8) comprises at least one of a rotational axis (7a-d) and a translation mechanism (8).

9. The robot unit (1) according to any of claims 7 and 8, wherein a majority of the brake units (11) of the motion mechanisms (7a-d, 8) are of the same type.

10. A method for controlling the operation of a robot unit (1), which robot unit (1) comprises a plurality of robot arms (5a-c) that each comprises at least one motion mechanism (7a-d, 8), wherein a tool (4) of the robot unit (1) is adapted to be moved along an operational path (2), wherein the method comprises:

- receiving information relating to the operation of the robot unit (1),
- determining the kinetic energy subjected to each motion mechanism (7a-d, 8) of the robot arms (5a-c) on basis of said information, and
- controlling the speed of each motion mechanism (7a-d, 8), while maintaining a movement of the tool (4) along the operational path (2), so that said kinetic energy subjected to each motion mechanism does not exceed a certain level, wherein said certain level of said kinetic energy is the same for at least two motion mechanisms.

11. The method according to claim 10, wherein the method comprises:

- receiving information on the speed of the at least one motion mechanism (7a-d, 8), and
- determining said kinetic energy on basis of the speed of one or more of the robot arms (5a-c) and the tool (4), and the mass of the one or more robot arms (5a-c) and the tool (4).

12. The method according to any of claims 10-11, wherein the method comprises:

- controlling the speed of each motion mechanism (7a-d, 8) so that said the kinetic energy does not exceed the certain level by regulating the speed of the motion mechanism (7a-d, 8) using the motor unit (9) of the respective at least one motion mechanisms (7a-d, 8).

13. The method according to claim 12, wherein the method comprises:

- regulating the speed of each motion mechanism (7a-d, 8) by means of reducing the induced power from the motor unit (9).

14. The method according to claim 12, wherein the method comprises:

- regulating the speed of each motion mechanisms (7a-d, 8) by means of motor braking with the motor unit (9).

15. The method according to any of claims 10-11, wherein the method comprises:

- controlling the speeds of each motion mechanisms (7a-d, 8) so that said kinetic energy does not exceed the certain level by applying the brake unit (11) of the respective at least one motion mechanisms (7a-d, 8).

**Patentansprüche**

1. Robotersteuergerät (3) zum Steuern des Betriebs einer Robotereinheit (1), wobei die Robotereinheit (1) eine Vielzahl von Roboterarmen (5a-c) umfasst, die jeweils mindestens einen Bewegungsmechanismus (7a-d, 8) umfassen, der dazu ausgelegt ist, den Roboterarm (5a-c) in Bewegung zu setzen, wobei ein Werkzeug (4) der Robotereinheit (1) dazu ausgelegt ist, entlang eines Arbeitswegs (2) bewegt zu werden, das Robotersteuergerät (3) dazu ausgelegt ist, die kinetische Energie zu bestimmen, der jeder Bewegungsmechanismus (7a-d, 8) der Roboterarme (5a-c) ausgesetzt ist, und basierend auf den bestimmten kinetischen Energien die Geschwindigkeit jedes Bewegungsmechanismus (7a-d, 8) zu steuern, während eine Bewegung des Werkzeugs (4) entlang des Arbeitswegs (2) aufrechterhalten wird, sodass die kinetische Energie, der jeder Bewegungsmechanismus ausgesetzt ist, ein bestimmtes Niveau nicht überschreitet,
**dadurch gekennzeichnet, dass**
das bestimmte Niveau der kinetischen Energie für mindestens zwei Bewegungsmechanismen gleich ist.

2. Robotersteuergerät (3) gemäß Anspruch 1, wobei das Robotersteuergerät (3) dazu ausgelegt ist, die kinetische Energie basierend auf der Geschwindigkeit eines oder mehrerer der Roboterarme (5a-c) und des Werkzeugs (4) sowie der Masse des einen oder der mehreren Roboterarme (5a-c) und des Werkzeugs (4) zu bestimmen.

3. Robotersteuergerät (3) gemäß einem der Ansprüche 1 und 2, wobei jeder Bewegungsmechanismus (7a-d, 8) eine Motoreinheit (9) umfasst, und wobei das Robotersteuergerät (3) dazu ausgelegt ist, die Geschwindigkeit jedes Bewegungsmechanismus (7a-d, 8) so zu steuern, dass die kinetische Energie ein bestimmtes Niveau nicht überschreitet, durch Regeln der Geschwindigkeit jedes Bewegungsmechanismus (7a-d, 8) unter Verwendung der jeweiligen Motoreinheit (9).

4. Robotersteuergerät (3) gemäß Anspruch 3, wobei jede Motoreinheit (9) dazu ausgelegt ist, die Geschwindigkeit des jeweiligen Bewegungsmechanismus (7a-d, 8) durch Reduzieren der aus der Motoreinheit (9) induzierten Leistung zu regeln.

5. Robotersteuergerät (3) gemäß Anspruch 3, wobei jede Motoreinheit (9) dazu ausgelegt ist, die Geschwindigkeit des jeweiligen Mechanismus (7a-d, 8) durch Motorbremsung mit der Motoreinheit (9) zu regeln.

6. Robotersteuergerät (3) gemäß einem der vorhergehenden Ansprüche, wobei jeder Bewegungsmechanismus (7a-d, 8) eine Bremseinheit (11) umfasst und wobei das Robotersteuergerät (3) dazu ausgelegt ist, die Geschwindigkeit jedes Bewegungsmechanismus (7a-d, 8) so zu steuern, dass die kinetische Energie durch Betätigen der jeweiligen Bremseinheit (11) ein bestimmtes Niveau nicht überschreitet.

7. Robotereinheit (1), umfassend ein Robotersteuergerät (3) gemäß einem der Ansprüche 1-6.

8. Robotereinheit (1) gemäß Anspruch 7, wobei der Bewegungsmechanismus (7a-d, 8) mindestens eine Rotationsachse (7a-d) und einen Translationsmechanismus (8) umfasst.

9. Robotereinheit (1) gemäß einem der Ansprüche 7 und 8, wobei die Vielzahl der Bremseinheiten (11) der Bewegungsmechanismen (7a-d, 8) von der gleichen Art sind.

10. Verfahren zum Steuern des Betriebs einer Robotereinheit (1), wobei die Robotereinheit (1) eine Vielzahl von Roboterarmen (5a-c) umfasst, die jeweils mindestens einen Bewegungsmechanismus (7a-d, 8) umfassen, wobei ein Werkzeug (4) der Robotereinheit (1) dazu ausgelegt ist, entlang eines Arbeitswegs (2) bewegt zu werden, wobei das Verfahren umfasst:

- Empfangen von Informationen, die sich auf den Betrieb der Robotereinheit (1) beziehen,
- Bestimmen der kinetischen Energie, der jeder Bewegungsmechanismus (7a-d, 8) der Roboterarme (5a-c) ausgesetzt wird, basierend auf diesen Informationen, und
- Steuern der Geschwindigkeit jedes Bewegungsmechanismus (7a-d, 8), während eine Bewegung des Werkzeugs (4) entlang des Arbeitswegs (2) aufrechterhalten wird, sodass die jedem Bewegungsmechanismus ausgesetzte kinetische Energie ein bestimmtes Niveau nicht überschreitet, wobei das bestimmte Niveau der kinetischen Energie für mindestens zwei Bewegungsmechanismen gleich ist.

11. Verfahren gemäß Anspruch 10, wobei das Verfahren umfasst:

- Empfangen von Informationen über die Geschwindigkeit des mindestens einen Bewegungsmechanismus (7a-d, 8), und
- Bestimmen der kinetischen Energie basierend auf der Geschwindigkeit eines oder mehrerer der Roboterarme (5a-c) und des Werkzeugs (4) sowie der Masse des einen oder der mehreren Roboterarme (5a-c) und des Werkzeugs (4).

12. Verfahren gemäß einem der Ansprüche 10-11, wobei das Verfahren umfasst:

- Steuern der Geschwindigkeit jedes Bewegungsmechanismus (7a-d, 8) so, dass die kinetische Energie ein bestimmtes Niveau nicht überschreitet, durch Regeln der Geschwindigkeit des Bewegungsmechanismus (7a-d, 8) unter Verwendung der Motoreinheit (9) des jeweiligen mindestens einen Bewegungsmechanismus (7a-d, 8).

13. Verfahren gemäß Anspruch 12, wobei das Verfahren umfasst:

- Regeln der Geschwindigkeit jedes Bewegungsmechanismus (7a-d, 8) durch Reduzieren der aus der Motoreinheit (9) induzierten Leistung.

14. Verfahren gemäß Anspruch 12, wobei das Verfahren umfasst:

- Regeln der Geschwindigkeit jedes Bewegungsmechanismus (7a-d, 8) durch Motorbremsung mit der Motoreinheit (9).

15. Verfahren gemäß einem der Ansprüche 10-11, wobei das Verfahren umfasst:

- Steuern der Geschwindigkeiten jedes Bewegungsmechanismus (7a-d, 8) so, dass die kinetische Energie ein bestimmtes Niveau nicht überschreitet, durch Betätigen der Bremseinheit (11) des jeweiligen mindestens einen Bewegungsmechanismus (7a-d, 8).

## Revendications

1. Dispositif de commande de robot (3) pour commander le fonctionnement d'une unité de robot (1), laquelle unité de robot (1) comprend une pluralité de bras de robot (5a-c) qui comprennent chacun au moins un mécanisme de mouvement (7a-d, 8) adapté pour mettre le bras de robot (5a-c) en mouvement, dans lequel un outil (4) de l'unité de robot (1) est adapté pour être déplacé le long d'un chemin opérationnel (2), le dispositif de commande de robot (3) étant adapté pour déterminer l'énergie cinétique soumise à chaque mécanisme de mouvement (7a-d, 8) des bras de robot (5a-c), et, sur la base des énergies cinétiques déterminées, commander la vitesse de chaque mécanisme de mouvement (7a-d, 8), tout en maintenant un mouvement de l'outil (4) le long du chemin opérationnel (2), de sorte que ladite énergie cinétique soumise à chaque mécanisme de mouvement ne dépasse pas un certain niveau, **caractérisé en ce que** ledit certain niveau de ladite énergie cinétique est le même pour au moins deux mécanismes de mouvement.

2. Dispositif de commande de robot (3) selon la revendication 1, dans lequel le dispositif de commande de robot (3) est adapté pour déterminer ladite énergie cinétique sur la base de la vitesse de l'un ou plusieurs des bras de robot (5a-c) et de l'outil (4), et de la masse des un ou plusieurs bras de robot (5a-c) et de l'outil (4).

3. Dispositif de commande de robot (3) selon l'une quelconque des revendications 1 et 2, dans lequel chaque mécanisme de mouvement (7a-d, 8) comprend une unité de moteur (9), et dans lequel le dispositif de commande de robot (3) est adapté pour commander la vitesse de chaque mécanisme de mouvement (7a-d, 8) de sorte que ladite énergie cinétique ne dépasse pas le certain niveau en régulant la vitesse de chaque mécanisme de mouvement (7ad, 8) à l'aide de l'unité de moteur (9) respective.

4. Dispositif de commande de robot (3) selon la revendication 3, dans lequel chaque unité de moteur (9) est adaptée pour réguler la vitesse du mécanisme de mouvement (7a-d, 8) respectif au moyen de la réduction de la puissance induite de l'unité de moteur (9).

5. Dispositif de commande de robot (3) selon la revendication 3, dans lequel chaque unité de moteur (9) est adaptée pour réguler la vitesse du mécanisme (7a-d, 8) respectif au moyen d'un freinage moteur avec l'unité de moteur (9).

6. Dispositif de commande de robot (3) selon l'une quelconque des revendications précédentes, dans lequel chaque mécanisme de mouvement (7a-d, 8) comprend une unité de freinage (11), et dans lequel le dispositif de commande de robot (3) est adapté pour commander la vitesse de chaque mécanisme de mouvement (7a-d, 8) de sorte que ladite énergie cinétique ne dépasse pas le certain niveau en appliquant l'unité de freinage (11) respective.

7. Unité de robot (1) comprenant un dispositif de commande de robot (3) selon l'une quelconque des revendications 1 à 6.

8. Unité de robot (1) selon la revendication 7, dans laquelle le mécanisme de mouvement (7a-d, 8) comprend au moins l'un d'un axe de rotation (7a-d) et d'un mécanisme de translation (8).

9. Unité de robot (1) selon l'une quelconque des revendications 7 et 8, dans laquelle une majorité des unités de freinage (11) des mécanismes de mouvement (7ad, 8) sont du même type.

10. Procédé pour commander le fonctionnement d'une unité de robot (1), laquelle unité de robot (1) comprend une pluralité de bras de robot (5a-c) qui comprennent chacun au moins un mécanisme de mouvement (7a-d, 8), dans lequel un outil (4) de l'unité de robot (1) est adapté pour être déplacé le long d'un chemin opérationnel (2), dans lequel le procédé comprend :

    - la réception d'informations liées au fonctionnement de l'unité de robot (1),
    - la détermination de l'énergie cinétique soumise à chaque mécanisme de mouvement (7a-d, 8) des bras de robot (5a-c) sur la base desdites informations, et
    - la commande de la vitesse de chaque mécanisme de mouvement (7a-d, 8), tout en maintenant un mouvement de l'outil (4) le long du chemin opérationnel (2), de sorte que ladite énergie cinétique soumise à chaque mécanisme de mouvement ne dépasse pas un certain niveau, dans lequel ledit certain niveau de ladite énergie cinétique est le même pour au moins deux mécanismes de mouvement.

11. Procédé selon la revendication 10, dans lequel le procédé comprend :

    - la réception d'informations sur la vitesse du ou des mécanismes de mouvement (7a-d, 8), et
    - la détermination de ladite énergie cinétique sur la base de la vitesse de l'un ou plusieurs des

**EP 3 191 263 B1**

bras de robot (5a-c) et de l'outil (4), et de la masse des un ou plusieurs bras de robot (5a-c) et de l'outil (4).

**12.** Procédé selon l'une quelconque des revendications 10 à 11, dans lequel le procédé comprend :

- la commande de la vitesse de chaque mécanisme de mouvement (7a-d, 8) de sorte que ladite énergie cinétique ne dépasse pas le certain niveau en régulant la vitesse du mécanisme de mouvement (7a-d, 8) à l'aide de l'unité de moteur (9) du ou des mécanismes de mouvement (7a-d, 8) respectifs.

**13.** Procédé selon la revendication 12, dans lequel le procédé comprend :

- la régulation de la vitesse de chaque mécanisme de mouvement (7a-d, 8) au moyen de la réduction de la puissance induite de l'unité de moteur (9).

**14.** Procédé selon la revendication 12, dans lequel le procédé comprend :

- la régulation de la vitesse de chaque mécanisme de mouvement (7a-d, 8) au moyen d'un freinage moteur avec l'unité de moteur (9).

**15.** Procédé selon l'une quelconque des revendications 10 à 11, dans lequel le procédé comprend :

- la commande de la vitesse de chaque mécanisme de mouvement (7a-d, 8) de sorte que ladite énergie cinétique ne dépasse pas le certain niveau en appliquant l'unité de freinage (11) du ou des mécanismes de mouvement (7ad, 8) respectifs.

Fig. 1a

Fig. 1b

START

RECEIVING INFORMATION ON OPERATION OF ROBOT UNIT — 110

DETERMINING KINETIC ENERGY SUBJECTED TO EACH MOTION MECHANISM — 120

CONTROLLING SPEEDS OF MOTION MECHANISMS SO THAT
KINETIC ENERGY DOES NOT EXCEED CERTAIN LEVEL WHILE MAINTAINING
MOVEMENT OF TOOL ALONG OPERATIONAL PATH — 130

Fig. 2

**EP 3 191 263 B1**

## REFERENCES CITED IN THE DESCRIPTION

### Patent documents cited in the description

- US 2003233171 A
- US 7852030 B
- US 6791292 B2